# EUROPÄISCHE PATENTSCHRIFT

(11) **EP 3 749 886 B1**
(45) Veröffentlichungstag und Bekanntmachung des Hinweises auf die Patenterteilung: **14.08.2024**
(21) Anmeldenummer: 19708282.9
(22) Anmeldetag: 27.02.2019
(51) Int. Cl.: F16L 41/10, F16L 5/06

(54) **ANSCHLUSSTEIL MIT EINER DICHTUNG**
CONNECTING PART WITH A SEAL
PIÈCE DE RACCORDEMENT AVEC UN JOINT D'ÉTANCHÉITÉ

(30) Priorität: 28.02.2018 DE 102018104617
(43) Veröffentlichungstag der Anmeldung: 16.12.2020
(73) Patentinhaber: Pflitsch GmbH & Co. KG., 42499 Hückeswagen (DE)
(72) Erfinder: LECHNER, Martin, 51789 Lindlar (DE)
(74) Vertreter: Geskes, Christoph
(86) Internationale Anmeldenummer: PCT/EP2019/054880
(87) Internationale Veröffentlichungsnummer: WO 2019/166501

(56) Entgegenhaltungen:
- EP-A2- 1 898 506
- WO-A1-2017/029232
- DE-A1- 102007 007 780
- DE-A1- 102013 109 424

## Beschreibung

Die Erfindung betrifft ein Anschlussteil, ein Verfahren zur Montage eines Anschlussteils mit einem Druckelement und eine Verwendung eines Anschlussteils.

Verschraubungssysteme zur Verschraubung von Langformteilen mit einer Anschlussgeometrie sind aus dem Stand der Technik bekannt. So beschreibt beispielsweise die DE 20 2008 017 534 U1 eine Vorrichtung zur abgedichteten und klemmenden Durchführung von Langformteilen mit einem Nippel, auf dessen Ende eine gelochte Druckschraube schraubbar ist. Zwischen Druckschraube und Nippel wird ein Dichteinsatz eingeklemmt. Durch den Nippel, Dichteinsatz und Druckschraube wird das Langformteil geführt. Die beschriebene Vorrichtung weist des Weiteren eine Hülse aus einem elastischen Werkstoff auf, die sich in Solllage gegen eine Druckschraube dichtend abstützt, den zwischen Druckschraube und einer Montageebene befindlichen Gewindebereich des Nippels umgibt und die sich an der Montageebene abstützt.

DE 10 2007 007 780 A1 beschreibt eine richtungseinstellbare Rohrverschraubung mit einem ein Außengewinde aufweisenden und in ein mit Innengewinde versehenes Einschraubloch eines Gegenstücks einschraubbaren Einschraubzapfen, welcher durch Anziehen einer auf seinem Außengewinde hin- und herschraubbaren und in Anlage an dem das Einschraubloch aufweisenden Gegenstück zu bringenden Gegenmutter an dem Gegenstück festlegbar ist.

EP 1 898 506 A2 beschreibt eine Kabel- oder Schlauchverschraubung umfassend einen mit einem Gehäuse verbindbaren, hohlzylinderförmigen Stutzen und ein mit dem Stutzen um eine Längsachse des Stutzens drehbar verbundenes Druckelement.

Nachteilig an den aus dem Stand der Technik bekannten Verschraubungssystemen ist, dass diese entweder kompliziert und damit kostentreibend zu installieren beziehungsweise aufwendig an einem Durchmesser eines Langformteils anzupassen sind.

Aufgabe der Erfindung ist es, die aus dem Stand der Technik bekannten Nachteile zu überkommen und ein verbessertes Verschraubungssystem für Langformteile zur Verfügung zu stellen. Insbesondere ist Aufgabe der Erfindung, eine Vereinfachung der Montage eines Anschlussteils mit einem Druckelement zur Verfügung zu stellen, die insbesondere Reinheitsvorschriften genügt.

Diese Aufgabe wird erfindungsgemäß gelöst durch ein Anschlussteil mit einer Dichtung, wobei das Anschlussteil ein Anschlussmittel und einen Druckelementanschluss umfasst, wobei das Anschlussteil und die Dichtung materialuneinheitlich ausgebildet sind, wobei die Dichtung zumindest eine sich nach radial innen erstreckende Ausprägung aufweist,wobei die Dichtung eine äußere Radialdichtungsoberfläche und die zumindest eine Ausprägung zumindest eine Axialdichtungsoberfläche umfasst, wobei die Dichtung zwischen Anschlussmittel und Druckelementanschluss angeordnet ist.

Weiterhin wird die Aufgabe erfindungsgemäß durch ein Verfahren zur Montage eines oben beschriebenen Anschlussteils mit einem Druckelement zur Bildung eines Verschraubungssystems mit einer Anschlussgeometrie und zumindest einem Langformteil, wobei ein Druckelementanschluss eines Anschlussteils mit einem Druckelement verbunden wird, wobei vor oder nach zumindest einer Teilmontage des Verschraubungssystems ein Anschlussmittel des Anschlussteils in eine Ausnehmung der Anschlussgeometrie eingebracht wird, wobei vor oder nach zumindest der Teilmontage des Verschraubungssystems das zumindest eine Langformteil zumindest durch eine Aufnahmeausnehmung des Anschlussteils und eine Ausgangsausnehmung des Druckelements geführt wird, wobei das Druckelement derart auf das Anschlussteil aufgebracht wird, dass eine zum Anschlussteil materialuneinheitlich ausgebildete Dichtung des Anschlussteils zumindest teilflächig dichtend mit einer Kontaktfläche des Druckelementes wirkt, wobei eine äußere Radialdichtungsoberfläche der Dichtung zumindest teilweise mit der Kontaktfläche des Kontaktwandungsabschnitts dichtend zusammen wirkt, wobei die Dichtung eine Ausprägung aufweist, die sich radial nach innen erstreckt, wobei zumindest eine Ausprägung eine Axialdichtungsoberfläche umfasst und das Anschlussteil derart in die Ausnehmung der Anschlussgeometrie eingebracht wird, dass eine Axialdichtungsoberfläche der Dichtung dichtend mit der Anschlussgeometrie zusammen wirkt.

Weiterhin wird die Aufgabe erfindungsgemäß gelöst mittels einer Verwendung eines Anschlussteils mit einem Druckelement zur dichtenden Verschraubung eines Langformteils mit einer Anschlussgeometrie.

Es wird ein Anschlussteil mit einer Dichtung vorgeschlagen, wobei das Anschlussteil ein Anschlussmittel und einen Druckelementanschluss umfasst. Das Anschlussteil und die Dichtung sind materialuneinheitlich ausgebildet, wobei die Dichtung zumindest eine sich nach radial innen erstreckende Ausprägung aufweist. Die zumindest eine Ausprägung umfasst eine äußere Radialdichtungsoberfläche und zumindest eine Axialdichtungsoberfläche, wobei die Dichtung zwischen Anschlussmittel und Druckelementanschluss angeordnet ist.

In einer Ausgestaltung ist vorgesehen, dass das Anschlussteil und das Druckelement ein Verschraubungssystem bilden, wobei das Druckelement zumindest einen Kontaktwandungsabschnitt mit einer Kontaktfläche umfasst, wobei die äußere Radialdichtungsoberfläche zumindest teilweise mit der Kontaktfläche dichtend zusammen wirkt und wobei die Axialdichtungsoberfläche zur Abdichtung mit einer Anschlussgeometrie ausgestaltet ist.

Beispielsweise bilden das Anschlussteil und das Druckelement ein Verschraubungssystem zur Verschraubung eines Langformteils mit einer Anschlussgeometrie, welches zumindest ein Druckelement, ein Anschlussteil und eine Dichtung umfasst, wobei das Anschlussteil und die Dichtung materialuneinheitlich ausgebildet sind. Das Druckelement umfasst zumindest einen Kontaktwandungsabschnitt mit einer Kontaktfläche. Die Dichtung umfasst zumindest eine äußere Radialdichtungsoberfläche und zumindest eine Axialdichtungsoberfläche sowie zumindest eine sich nach radial innen erstreckende Ausprägung, wobei zumindest eine Ausprägung die Axialdichtungsoberfläche umfasst. Die äußere Radialdichtungsoberfläche der Dichtung wirkt zumindest teilweise mit der Kontaktfläche des Kontaktwandungsabschnitts dichtend zusammen. Die Axialdichtungsoberfläche ist zumindest zur teilweisen Abdichtung mit der Anschlussgeometrie ausgestaltet.

Das Verschraubungssystem ist insbesondere für Apparate und Maschinen in hygienisch sensiblen Bereichen einsetzbar, insbesondere bei der Nahrungsmittelherstellung. Diese Apparate und Maschinen sollen leicht zu warten sein, ein Eindringen von Mikroorganismen ist zu verhindern. Die Apparate und Maschinen und müssen daher leicht zu reinigen sein, um die Produkte, die mit diesen Maschinen und Apparaten in Kontakt kommen, vor Kontamination zu schützen. Antiseptische Bauteile sollten insbesondere sterilisierbar oder pasteurisierbar sein. Weiterhin ist insbesondere die Reinigung der Maschinen oder Apparate sicher und effizient zu gestalten. Insbesondere um die hygienischen Anforderungen zu erfüllen und eine gewisse Haltbarkeit der Produkte zu erreichen wird angestrebt, die Anzahl der Mikroorganismen in Nahrungsmitteln so niedrig wie möglich zu halten. Verschraubungen von Langformteilen, die durch Anschlussgeometrien geführt werden, sind dabei ein kritischer Punkt. Das erfindungsgemäße Verschraubungssystem wirkt aufgrund der Einfachheit und der fehlenden oder zumindest stark reduzierten Nistmöglichkeiten für Mikroorganismen in Spalten oder Öffnungen sehr vorteilhaft. Durch die Dichtung, die sowohl eine Axialdichtung als auch eine Radialdichtung ermöglicht, werden Spalten vermieden. Eine sichere Verschraubung des mindestens einen Langformteils wird durch das Verschraubungssystem gewährleistet. Bei der Montage ist eine aus dem Stand der Technik bekannte Anpassung des Verschraubungssystems durch Hinzufügen oder Austauschen von Bauteilen an einen Durchmesser des mindestens einen Langformteils nicht nötig. Insbesondere werden keine Zusatzteile verwendet, wie beispielsweise Unterlegscheiben, die zur Anpassung einer Verpressung beziehungsweise Abdichtung an Langformteile mit unterschiedlichen Durchmessern zwischen Anschlussteil und Anschlussgeometrie gelegt werden.

Das Anschlussteil ist insbesondere als Nippel ausgestaltet. Bevorzugt ist das Anschlussteil ein Doppelnippel. In einer Ausführungsform weist das Anschlussteil ein Anschlussmittel und eine Druckelementaufnahme auf. Bevorzugt sind Anschlussmittel und/oder Druckelementaufnahme als Gewinde, bevorzugt Außengewinde ausgestaltet. Mit dem Anschlussmittel ist vorzugsweise eine Verbindung mit der Anschlussgeometrie herstellbar. Die Druckelementaufnahme weist in einer Ausführungsform Schlüsselanlageflächen, beispielsweise zwei, vier, sechs oder acht, auf, die in einer Ausführungsform eine Anzahl von Gewindegängen zumindest teilweise unterbrechen. In einer bevorzugten Ausführungsform weist das Anschlussteil einen Dichtungsabschnitt auf. Der Dichtungsabschnitt ist bevorzugt zwischen dem Anschlussmittel und der Druckelementaufnahme angeordnet. In einer Ausführungsform ist vorgesehen, dass die Dichtung durch einen Dichtungsabschnitt gebildet wird. In einer weiteren Ausführungsform ist vorgesehen, dass die Dichtung zumindest teilweise auf dem Dichtungsabschnitt angeordnet ist.

In einer Ausgestaltung ist vorgesehen, dass das Anschlussteil mit der Dichtung, also das Anschlussteil und die Dichtung, und damit auch der Dichtungsabschnitt materialuneinheitlich ausgebildet sind. In einer weiteren Ausgestaltung ist vorgesehen, dass Anschlussteil und Dichtung einstückig ausgestaltet sind. Einstückig im Sinne der Erfindung bedeutet, dass zumindest zwei Teile, insbesondere die Dichtung und das Anschlussteil, materialverbunden sind. Sind einstückig verbundene Teile aus einem Material gefertigt, sind die Teile materialeinheitlich. Weiterhin kann unter 'einstückig' auch verstanden werden, dass die zumindest zwei Teile unterschiedliche Materialien aufweisen können, die allerdings in der Lage sind, sich durch das Material zumindest an einer Grenzfläche zu verbinden, also materialverbunden sind. Beispielsweise kann die Dichtung ein anderes Kunststoffmaterial aufweisen als das Anschlussteil. Einstückige Verbindungen können nicht zerstörungsfrei von einander gelöst werden. Einstückige Teile können beispielsweise gespritzt oder mittels eines generativen Fertigungsverfahrens gefertigt sein, beispielsweise durch Einkomponentenspritzgussverfahren oder Zweikomponentenspritzgussverfahren. Unter materialuneinheitlich wird im Sinne der Erfindung verstanden, dass zwei Teile, insbesondere die Dichtung und das Anschlussteil, nicht materialverbunden und damit zweistückig sind. Die Teile können unterschiedliche oder gleiche Materialien aufweisen.

In einer Ausführungsform, in der Anschlussteil und Dichtung einstückig ausgestaltet sind, weist die Dichtung respektive der Dichtungsabschnitt die äußere Radialdichtungsoberfläche und die zumindest eine Axialdichtungsoberfläche auf.

In einer Ausgestaltung, in der Anschlussteil und Dichtung materialuneinheitlich ausgestaltet sind, ist die Dichtung bevorzugt als Dichthülse ausgestaltet. Insbesondere ergeben sich durch die materialuneinheitliche Ausgestaltung aneinander grenzende Flächen von Dichtung und Anschlussteil. Insbesondere weist der Dichtungsabschnitt eine Dichtungsabschnittsoberfläche auf. Weiter bevorzugt weist die Dichtung eine innere Radialdichtungsoberfläche auf. Bevorzugt grenzen die innere Radialdichtungsoberfläche und die Dichtungsabschnittsoberfläche zumindest teilweise aneinander. Weiter bevorzugt ist eine lichte Weite der Dichtung, die insbesondere als Dichthülse ausgestaltet ist, im unmontierten Zustand kleiner als ein Außendurchmesser der im montierten Zustand korrespondierenden Dichtungsabschnittsoberfläche. Hierdurch sitzt die Dichtung mit einer Presspassung auf dem Dichtungsabschnitt.

Das Druckelement ist in einer bevorzugten Ausführungsform als Überwurfmutter ausgestaltet. Insbesondere weist das Druckelement eine Ausgangsöffnung auf, die weiter bevorzugt am kopfseitigen Ende des Druckelements angeordnet ist. Besonders bevorzugt ist vorgesehen, dass die Ausgangsöffnung zur Durchführung mindestens eines Langformteils ausgestaltet ist. Die Ausgangsöffnung ist insbesondere eine kreisrunde Öffnung.

Weiterhin bevorzugt weist das Druckelement ein Befestigungsmittel auf, das besonders bevorzugt als ein Innengewinde ausgestaltet ist. Das Befestigungsmittel ist insbesondere der Ausgangsöffnung zugeordnet. In einer weiteren Ausführungsform ist vorgesehen, dass das Druckelement eine Kopfdichtungsaufnahme aufweist, welche in einer besonderen Ausführungsform eine glatte Innenoberfläche umfasst. Bevorzugt ist die Kopfdichtungsaufnahme ein bevorzugt im Querschnitt runder Raumabschnitt im Druckelement.

Weiterhin umfasst das Druckelement den Kontaktwandungsabschnitt mit der bevorzugt innenliegenden Kontaktfläche. In einer Ausführungsform ist die Kontaktfläche eine Teilfläche einer Innenoberfläche des Kontaktwandungsabschnitts. Weiter bevorzugt ist vorgesehen, dass die Kontaktfläche dem fußseitigen Ende des Druckelements beziehungsweise des Kontaktwandungsabschnitts zugeordnet ist. In einer weiteren bevorzugten Ausführungsform ist die Kontaktfläche auf einem radial nach innen vorspringenden, insbesondere vollständig umlaufenden Absatz auf der Innenseite des Kontaktwandungsabschnitts angeordnet. Bevorzugt weist die Kontaktfläche eine definierte Flächengröße auf, die beispielsweise durch eine Höhe des Absatzes vorgegeben ist. Vorteilhaft daran ist insbesondere, dass eine definierte Abdichtung der Kontaktfläche erzeugt wird und weiter bevorzugt ein Reibwiderstand, der zwischen Dichtung und Kontaktfläche erzeugt wird, beim Aufschrauben des Druckmittels auf dem Anschlussteil gleich bleibt. Bevorzugt ist die lichte Weite des Druckmittels im Bereich der Kontaktfläche kleiner als ein Außendurchmesser der Dichtung. Vorteilhafterweise kann so eine Pressung zwischen Dichtung und Kontaktfläche zu erzeugt werden.

Werden im Rahmen der Beschreibung der Erfindung Richtungsangaben verwendet, so sind diese bezogen auf den üblichen Gebrauch des Verschraubungssystems zu verstehen. Unter dem Begriff 'fußseitig' wird im Sinne der vorliegenden Erfindung verstanden, dass das entsprechende Merkmal bei vorgesehener Verwendung des Verschraubungssystems einer Anschlussgeometrie zugeordnet oder zu dieser gerichtet ist. Unter 'kopfseitig' wird im Sinne der vorliegenden Erfindung verstanden, dass das entsprechende Merkmal bei vorgesehener Verwendung des Verschraubungssystems fern oder auch abgewandt der Anschlussgeometrie ist.

Vorteilhaftweise ist vorgesehen, dass der Kontaktwandungsabschnitt einen fußseitig sich öffnenden Raum bildet. Weiterhin umfasst das Druckelement einen Außenumfang beziehungsweise eine Außenoberfläche, welche in einer bevorzugten Ausführungsform Schlüsselanlagenflächen, insbesondere für einen Schraubenschlüssel, beispielsweise zwei, vier, fünf, sechs oder acht, aufweist.

In einer Ausführungsform weist das Verschraubungssystem eine Kopfdichtung auf. Die Kopfdichtung ist bevorzugt kopfseitig dem Anschlussteil zugeordnet. In einer weiteren Ausgestaltung sind Anschlussteil und Kopfdichtung einstückig oder materialuneinheitlich ausgestaltet. Bevorzugt weist die Kopfdichtung einen Druckabschnitt auf. Der Druckabschnitt ist bevorzugt zumindest teilweise linsenförmig oder zumindest teilweise domförmig beziehungsweise hutförmig ausgestaltet. Die Kopfdichtung weist in einer mit dem Anschlussteil materialuneinheitlichen Ausführungsform einen konischen oder zylindrischen Abschnitt auf. Die Kopfdichtung umfasst vorzugsweise eine durchgehende Ausnehmung, die insbesondere den konischen oder zylindrischen Abschnitt und den Druckabschnitt durchgreift. Weiter bevorzugt verjüngt sich die durchgehende Ausnehmung im Bereich des Druckabschnitts. Weiterhin bevorzugt verläuft die Verjüngung der durchgehenden Ausnehmung in Richtung einer Kopfseite der Kopfdichtung. In einer weiteren Ausführungsform, in der Anschlussteil und Kopfdichtung einstückig ausgestaltet sind, ist vorgesehen, dass die Kopfdichtung nur einen Druckabschnitt aufweist.

Der Dichtungsabschnitt des Anschlussteils weist in einer Ausgestaltung einen glatten Außenumfang auf. In einer weiteren Ausführungsform ist vorgesehen, dass der Außenumfang zumindest am kopfseitigen Ende des Dichtungsabschnitts eine Fase aufweist. In einer weiteren Ausführungsform, in der Anschlussteil und Dichtung materialuneinheitlich ausgestaltet sind, ist vorgesehen, dass der Dichtungsabschnitt zumindest ein Haltemittel aufweist. Das Haltemittel kann als Rippe ausgebildet sein, insbesondere können etwa eine bis etwa acht Rippen, weiter bevorzugt etwa eine bis etwa vier Rippen, weiter bevorzugt etwa zwei bis etwa vier Rippen, vorgesehen sein.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ein Toleranzbereich von ±20 %, bevorzugt ±10 %, weiter bevorzugt ±5 %.

Besonders bevorzugt ist vorgesehen, dass das Haltemittel zumindest eine Haltemittelaxialoberfläche aufweist. Die Haltemittelaxialoberfläche ist bevorzugt eine Oberfläche oder ein Oberflächenabschnitt des Haltemittels, dessen Flächennormale im Wesentlichen in Richtung des Fußes des Anschlussteils zeigt. In einer weiteren bevorzugten Ausgestaltung ist vorgesehen, dass die Flächennormale der Haltemittelaxialoberfläche einen Winkel zur Längsrichtung des Anschlussteils von etwa 0° bis etwa 30°, bevorzugt 0° bis etwa 5°, aufweist.

Der Begriff "im Wesentlichen" im Sinne der vorliegenden Erfindung gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

Im Rahmen der Erfindung bezeichnet der Begriff "Flächennormale" einen Vektor, der senkrecht auf einer Fläche steht. Insbesondere ist die Flächennormale der Vektor, der auf einer im Wesentlichen ebenen Fläche steht.

In einer weiteren Ausführungsform ist vorgesehen, dass der Außenumfang des Dichtungsabschnitts die Dichtungsabschnittsoberfläche aufweist. In einer weiteren Ausführungsform ist vorgesehen, dass die Dichtungsabschnittsoberfläche sich im Wesentlichen vollständig in Längs- und/oder Umfangsrichtung über den Dichtungsabschnitt erstreckt.

Das Anschlussteil umfasst weiter bevorzugt eine Anschlussteilausnehmung. Die Anschlussteilausnehmung ist weiter bevorzugt eine in Längsrichtung durchgängige Ausnehmung, die weiter bevorzugt zur Aufnahme mindestens eines Langformteils ausgestaltet ist. Die Anschlussteilausnehmung umfasst eine Durchgangsweite. Weiter bevorzugt umfasst die Anschlussteilausnehmung eine im Wesentlichen glatte Innenoberfläche. In einer weiteren Ausführungsform ist vorgesehen, dass die Anschlussteilausnehmung kopfseitig trichterförmig ausgestaltet ist. Weiterhin ist in einer Ausführung, in der Anschlussteil und Kopfdichtung materialuneinheitlich ausgestaltet sind, vorgesehen, dass das Anschlussteil kopfseitig ein Kopfdichtungslager zur Lagerung der Kopfdichtung umfasst, das bevorzugt von der Anschlussteilausnehmung durchgriffen wird.

Eine fußseitige Öffnung der Anschlussteilausnehmung wird in einer Ausführungsform von einer Anschlussgeometriekontaktfläche umschlossen. Bevorzugt ist die Anschlussgeometriekontaktfläche eine ebene Ringfläche, deren Flächennormale im Wesentlichen parallel zur Längsrichtung des Anschlussteils ausgerichtet ist.

Die Dichtung umfasst eine äußere Radialdichtungsoberfläche und eine Axialdichtungsoberfläche. Die äußere Radialdichtungsoberfläche umfasst in einer Ausgestaltung eine im Wesentlichen glatte Oberfläche. In einer weiteren Ausführungsform ist vorgesehen, dass die äußere Radialdichtungsoberfläche eine Anfasung umfasst, die insbesondere am kopfseitigen Ende der Radialdichtungsoberfläche angeordnet ist.

Insbesondere dichtet die Axialdichtungsoberfläche nach axial hin. Bevorzugt ist die Axialdichtungsoberfläche ein Oberflächenabschnitt, dessen Flächennormale im Wesentlichen parallel zu einer Längsachse der Dichtung beziehungsweise des Anschlussteils angeordnet ist, und weiter bevorzugt in Richtung des Fußes des Anschlussteils zeigt. Insbesondere dichtet die Radialdichtungsoberfläche nach radial hin. Bevorzugt ist die innere und/oder äußere Radialdichtungsoberfläche ein bevorzugt vollständig umlaufender Oberflächenabschnitt, dessen Flächennormalen im Wesentlichen parallel zu einem Radius der Dichtung beziehungsweise des Anschlussteils angeordnet sind, und weiter bevorzugt rechtwinklig zur Längsachse der Dichtung angeordnet sind.

In einer nicht erfindungsgemäßen Ausgestaltung, in der das Anschlussteil mit der Dichtung einstückig ausgestaltet ist, ist die Axialdichtungsoberfläche mit der Anschlussgeometriekontaktfläche auf in Längsrichtung versetzten Ebenen angeordnet. In einer erfindungsgemäßen Ausgestaltung, in der Anschlussteil und Dichtung materialuneinheitlich ausgebildet sind, umfasst die insbesondere als Dichthülse ausgestaltete Dichtung zumindest eine sich radial nach innen erstreckende Ausprägung. In einer erfindungsgemäßen Ausgestaltung ist vorgesehen, dass zumindest eine Ausprägung die Axialdichtungsoberfläche umfasst. In einer weiteren Ausführungsform ist vorgesehen, dass die Flächennormale der Axialdichtungsoberfläche einen Winkel von etwa 0° bis etwa 20°, bevorzugt etwa 0° bis etwa 10°, weiter bevorzugt etwa 0° bis etwa 5°, zur Längsachse aufweist.

In einer weiteren Ausführungsform ist vorgesehen, dass die als Dichthülse ausgestaltete Dichtung die innere Radialdichtungsoberfläche aufweist. An einer bevorzugten Ausgestaltung ist vorgesehen, dass an der inneren Radialdichtungsoberfläche die zumindest eine Ausprägung angeordnet ist. In einer Ausführungsform ist vorgesehen, dass die innere Radialdichtungsoberfläche eine Mehrzahl von Ausprägungen, insbesondere etwa zwei bis etwa acht, weiter bevorzugt etwa zwei bis etwa vier Ausprägungen aufweist. In einer weiteren Ausführungsform ist vorgesehen, dass die zumindest eine Ausprägung als Rippe ausgestaltet ist. Insbesondere ist die zumindest eine Rippe vollständig umlaufend ausgestaltet. Insbesondere ist vorgesehen, dass zumindest eine Ausprägung, die auch eine Axialdichtungsoberfläche bildet, fußseitig an der Dichtung angeordnet ist. Beispielsweise ist eine als Rippe ausgestaltete Ausprägung insbesondere vollständig umlaufend am fußseitigen Ende der Dichtung angeordnet.

Die Anschlussgeometrie ist ein Bauteil, durch das insbesondere das mindestens eine Langformteil führbar ist. Die Anschlussgeometrie ist nicht Teil des erfindungsgemä-ßen Verschraubungssystems. Beispielsweise ist die Anschlussgeometrie eine Wandung, ein Gehäuse oder eine Kabelführung. Das Verschraubungssystem wird vorteilhafterweise an die dem Verschraubungssystem nicht zuzurechnende Anschlussgeometrie angebracht. Vorzugsweise weist die Anschlussgeometrie eine Durchgangsausnehmung auf, durch die das mindestens eine Langformteil führbar ist. Weiter bevorzugt wird das Verschraubungssystem derart an die Anschlussgeometrie angebracht, dass die Längsachse des Anschlussteils im Wesentlichen senkrecht zu einer Oberfläche der Anschlussgeometrie ist und/oder die Durchgangsausnehmung durchgreift. Die Durchgangsausnehmung weist in einer Ausführungsform ein Gewinde auf, in das vorteilhafterweise das Anschlussteil mit seinem ein Außengewinde umfassenden Anschlussmittel schraubbar ist. In einer weiteren Ausführungsform weist die Durchgangsausnehmung kein Gewinde auf und ist insbesondere als Bohrung ausgestaltet.

Das mindestens eine Langformteil umfasst zumindest einen länglichen, insbesondere biegsamen Körper ausgewählt aus einer Gruppe ausgewählt aus einer Gruppe umfassend Kabel, Schläuche und/oder Rohre. Besonders bevorzugt wird das Verschraubungssystem zur Verschraubung von Kabeln verwendet.

In einer Ausführungsform ist vorgesehen, dass die Ausprägung in eine Hinterschneidung des Anschlussteils zumindest teilweise formschlüssig eingreift. Ein zumindest teilweiser Eingriff bedeutet, dass nicht vollständig in der Hinterschneidung ein Kontakt zwischen Anschlussteil und Dichthülse besteht. Insbesondere ist die Hinterschneidung an einem Rücksprung, der bevorzugt am fußseitigen Ende des Dichtungsabschnittes des Anschlussteils angeordnet ist, vorgesehen. Durch diese Ausgestaltung ist vorteilhafterweise eine Verschiebung der als Dichthülse ausgebildeten Dichtung auf dem Anschlussteil im Wesentlichen unterbunden.

In einer weiteren Ausgestaltung ist vorgesehen, dass die als Dichthülse ausgebildete Dichtung eine Mehrzahl von Ausprägungen umfasst, die in zwischen Haltemitteln der Anschlussmittel gebildete Räume eingreifen. Insbesondere können etwa zwei bis etwa acht, weiter bevorzugt etwa zwei bis etwa vier Ausprägungen vorgesehen sein. Insbesondere können die Räume einseitig offen sein. In einer weiteren Ausgestaltung ist vorgesehen, dass ein fußseitig an dem Dichtungsabschnitt angeordneter Raum nach fußseitig offen ausgestaltet ist zur Bildung einer Axialdichtungsoberfläche durch eine in diesen eingreifende Ausprägung der Dichthülse. Insbesondere in einer Ausgestaltung, bei der die Ausprägungen als Rippen ausgestaltet sind, können diese zwischen die insbesondere ebenfalls als Rippen ausgestaltete Haltemittel und die damit zur Verfügung gestellten Räume des Dichtungsabschnitts des Anschlussteils greifen. Durch diese Ausgestaltung ist vorteilhafterweise eine Verschiebung der als Dichthülse ausgebildeten Dichtung auf dem Anschlussteil im Wesentlichen unterbunden.

In einer weiteren Ausführungsform ist vorgesehen, dass zumindest eine Ausprägung eine Axialsitzoberfläche aufweist. Bevorzugt weist eine Flächennormale der Axialsitzoberfläche im Wesentlichen in Richtung der Kopfseite der Dichtung. In einer weiteren Ausführungsform ist vorgesehen, dass die Flächennormale der Axialsitzoberfläche einen Winkel von etwa 0° bis etwa 20°, bevorzugt etwa 0° bis etwa 10°, weiter bevorzugt etwa 0° bis etwa 5°, zur Längsachse der Dichtung aufweist. Bevorzugt ist vorgesehen, dass mindestens eine Ausprägung der als Dichthülse ausgebildeten Dichtung die Axialsitzoberfläche umfasst, die mit der Haltemittelaxialoberfläche des Haltemittels des Anschlussteils zusammenwirkt. Wirken entgegengesetzt gerichtete Kräfte auf das Anschlussteil und die Dichtung, wird die Dichtung insbesondere in Längsrichtung derselben nicht bewegt. Bevorzugt pressen die Haltemittelaxialoberfläche und die Axialsitzoberfläche derart aufeinander, dass eine Verschiebung im Wesentlichen verhindert wird. Insbesondere ist die zumindest eine Axialsitzoberfläche der zumindest einen Ausprägung im Wesentlichen parallel zur Haltemittelaxialoberfläche des zumindest einen Haltemittels des Dichtungsabschnittes angeordnet.

Das Befestigungsmittel des Druckelementes ist der Druckelementaufnahme des Anschlussteils zuordenbar. Insbesondere ist mittels des als Innengewinde ausgestalteten Befestigungsmittels des Druckelementes dieses auf die als Außengewinde ausgestaltete Druckelementaufnahme des Anschlussteils schraubbar. In einer weiteren Ausführungsform ist vorgesehen, dass das Befestigungsmittel des Druckelements derart mit dem Druckelementanschluss des Anschlussteils verbindbar ist, dass der Kontaktwandungsabschnitt den Dichtungsabschnitt zumindest teilweise übergreift. Bevorzugt ist das Druckelement derart auf das Anschlussteil schraubbar, dass eine Kontaktfläche zumindest teilweise mit der auf dem Dichtungsabschnitt angeordneten Dichtung in Kontakt kommt. In einer weiter bevorzugten Ausführungsform ist vorgesehen, dass die Dichtung, die bevorzugt als Dichthülse ausgestaltet ist, dichtend zwischen dem Dichtungsabschnitt des Anschlussteils und dem Kontaktwandungsabschnitt des Druckelements anordenbar ist. Bevorzugt kommt die Kontaktfläche des Druckelements mit der äußeren Radialdichtungsoberfläche zumindest teilweise in Kontakt. Durch die Verschraubung des Druckelements auf dem Anschlussteil kann die Kopfdichtung zusammengedrückt werden. Insbesondere schmiegt sich die Kopfdichtung in einer Ausführungsform, in der Anschlussteil und Kopfdichtung materialuneinheitlich ausgestaltet sind, bevorzugt mit dem konischen oder zylindrischen Abschnitt zumindest teilweise in das Kopfdichtungslager des Anschlussteils. Durch den Druck des Druckelements wird bevorzugt die durchgehende Ausnehmung zumindest teilweise verengt. Befindet sich zumindest ein Langformteil in der durchgehenden Ausnehmung der Kopfdichtung, schmiegt sich eine Innenoberfläche der durchgehenden Ausnehmung insbesondere abdichtend an das Langformteil. Weiter bevorzugt ist der konische oder zylindrische Abschnitt der Kopfdichtung dem Kopfdichtungslager des Anschlussteils zuordenbar. Insbesondere drückt die Innenoberfläche der Kopfdichtungsaufnahme des Druckelements auf den Druckabschnitt der Kopfdichtung, wenn das Druckelement mit dem Anschlussteil verschraubt wird.

In einer weiteren Ausführungsform ist vorgesehen, dass die Dichtung in der Längsrichtung des Anschlussteils eine definierte Länge über die Anschlussgeometriekontaktfläche hinausragt. Wird das Anschlussteil in die Anschlussgeometrie eingeschraubt, wird die Dichtung zumindest fußseitig in aller Regel soweit zusammengedrückt, bis die Anschlussgeometriekontaktfläche des Anschlussteils vorzugsweise vollständig auf der Anschlussgeometrie aufliegt. Hierdurch wird eine definierte Pressung der Dichtung erzeugt. Weiter bevorzugt wird dadurch vorteilhafterweise erreicht, dass unabhängig von dem Aufschrauben des Druckelementes, welches eine Pressung der Kopfdichtung bewirkt, eine definierte Abdichtung des Anschlussteils zur Anschlussgeometrie erfolgt. In einer weiteren Ausgestaltung ist vorgesehen, dass die Dichtung definiert axial mit der Anschlussgeometrie und definiert radial mit dem Druckelement abdichtend verpressbar ist. Da die Anschlussgeometriekontaktfläche des Anschlussteils radial innenliegend von der Dichtung, die bevorzugt als Dichthülse ausgestaltet ist, angeordnet ist, ist eine hygienisch sichere Abdichtung insbesondere gemäß den Richtlinien der European Hygienic Engineering and Design Group (EHEDG) für Hygienebereiche, bevorzugt für Lebensmittel produzierende Gewerbe erzeugt. Besonders bevorzugt ist das Verschraubungssystem staub- und wasserdicht nach Schutzart IP68 oder IP 69K. Das Verschraubungssystem bietet insbesondere Schutz bei Hochdruckreinigung.

Ein weiterer Vorteil des Verschraubungssystems ist, dass nur eine Dichtung mit einer Doppelfunktion am Anschlussteil angeordnet wird und sowohl eine Abdichtung axial als auch radial, insbesondere eine Abdichtung zwischen Anschlussteil und Anschlussgeometrie und Anschlussteil und Druckelement, erzeugbar ist. Hierdurch werden insbesondere Kosten gespart. Des Weiteren ist die Handhabung wesentlich einfacher. Die Dichtungsflächen und die Dichtungskräfte beziehungsweise Flächenpressungen auf die Dichtung sind vorteilhafterweise bekannt und definiert, so dass eine nachweisbare und insbesondere protokollierbare Abdichtung erfolgen kann. Weiterer Vorteil ist der einfache Aufbau des Verschraubungssystems. Insbesondere kann das Druckelement unterschiedlich stark oder fest auf das Anschlussteil aufgeschraubt werden und somit die Kopfdichtung mit dem Langformteil je nach dessen Durchmesser verpresst werden, um dieses abzudichten. Insbesondere benötigt das Verschraubungssystem keine Unterlegscheiben, wie dies aus dem Stand der Technik bekannt ist. Das Druckelement kann einfach so weit auf das Anschlussteil geschraubt werden, bis die Kopfdichtung sich dichtend an den Umfang des Langformteils dichtend angeschmiegt hat. Eine Anpassung der lichten Weite der Kopfdichtungsausnehmung an einen Durchmesser des Langformteils ist somit leicht vorzunehmen. Des Weiteren ist vorteilhaft, dass das Verschraubungssystem in der Montage mit einem Standardverschraubungssystem vergleichbar ist. Die Möglichkeit der kostengünstigen Massenfertigung eines solchen Verschraubungssystems gilt als weiterer Vorteil des erfindungsgemäßen Verschraubungssystems.

Die Erfindung beschränkt sich nicht auf die dargestellten und beschriebenen Prinzipien der Abdichtung. Vielmehr können auch weitere, insbesondere aus dem Stand der Technik bekannte, Prinzipien der Langformteilabdichtung mit den beschriebenen Ausgestaltungen des Verschraubungssystems kombiniert werden.

Die Dichtung, die Kopfdichtung und/oder das Anschlussteil umfasst in einer Ausgestaltung zumindest ein Dichtmaterial ausgewählt aus einer Gruppe umfassend Kunststoff, bevorzugt thermoplastische Elastomere, Gummi und/oder Silikon. Das Druckelement und/oder das Anschlussteil weisen in einer Ausgestaltung zumindest ein Gehäusematerial auf ausgewählt aus einer Gruppe umfassend ein Metall, bevorzugt lebensmittelkonforme Metalle, weiter bevorzugt Edelstahl und/oder einen Kunststoff mit oder ohne Beschichtung. Bevorzugt ist vorgesehen, dass Komponenten aus Kunststoff ein detektierbares Material aufweisen. Insbesondere können detektierbare Materialien mittels Röntgenstrahl oder Metalldetektoren aufgefunden werden.

In einer Ausführungsform ist vorgesehen, dass die Dichtung, die bevorzugt als Dichthülse ausgestaltet ist, auf dem Anschlussteil montiert ist. In einer weiteren Ausführungsform ist vorgesehen, dass die Dichtung an das Anschlussteil angespritzt ist. In einer weiteren Ausführungsform ist vorgesehen, dass das Anschlussteil einstückig mit der Dichtung verbunden ist. Insbesondere ist die Dichtung mittels Zweikomponentenspritzgussverfahren zusammen mit dem Anschlussteil gefertigt. In einer weiteren Ausführungsform weisen Anschlussteil und Dichtung ein Dichtmaterial insbesondere ein sehr hartes Dichtmaterial auf, beispielsweise ein Block-Copolyester mit einer Härte von größer etwa 90 Shore A, bevorzugt etwa 91 Shore A bis etwa 100 Shore A. Im Sinne der Erfindung wird Shore A nach DIN ISO 7619-1, in der im Februar 2018 gültigen Ausführung, mit einer Haltezeit von 3 s für Vulkanisate und 15 s für Elastomere geprüft. In einer alternativen Ausgestaltung ist vorgesehen, dass das Anschlussteil und die Dichtung einstückig verbunden sind. Insbesondere werden Anschlussteil und Dichtung in einem Werkzeug gefertigt.

In einer weiteren Ausführung, bei der Anschlussteil und Dichtung materialuneinheitlich ausgestaltet sind, ist vorgesehen, dass der Dichtungsabschnitt die Dichtungsabschnittsoberfläche umfasst, wobei die Dichtung, die bevorzugt als Dichthülse ausgestaltet ist, die innere Radialdichtungsoberfläche umfasst, wobei die Dichtungsabschnittsoberfläche mit der inneren Radialdichtungsoberfläche dichtend zusammenwirkt. In einer Ausgestaltung ist vorgesehen, dass Anschlussteil und Dichtung, die bevorzugt als Dichthülse ausgestaltet ist, materialuneinheitlich ausgestaltet sind. Hierdurch ergeben sich aneinander grenzende Dichtflächen, namentlich die Dichtungsabschnittsoberfläche des Anschlussteils und die innere Radialdichtungsoberfläche der Dichtung. In einer Ausgestaltung ist die Dichtung, die bevorzugt als Dichthülse ausgestaltet ist, derart ausgestaltet, dass diese im unmontierten Zustand eine kleinere lichte Weite aufweist, als das Anschlussteil einen Außendurchmesser an der im montierten Zustand korrespondierenden Stelle. Hierdurch wird erreicht, dass die Dichtung sich bei der Montage aufweitet und mit einer Presspassung auf dem Anschlussteil sitzt.

In einer ersten beispielhaften Ausgestaltung ist vorgesehen, dass das Anschlussteil zumindest eine Hinterschneidung aufweist, die bevorzugt dem Fußende des Anschlussteils zugeordnet ist. Die Dichtung, die bevorzugt als Dichthülse ausgestaltet ist, weist entsprechend auf der inneren Radialdichtungsoberfläche zumindest eine korrespondierende, sich nach innen erstreckende Ausprägung auf, die in die zumindest eine Hinterschneidung zumindest teilweise formschlüssig eingreift.

In einer zweiten beispielhaften Ausgestaltung ist vorgesehen, dass der Dichtungsabschnitt des Anschlussteils eine oder mehrere Haltemittel aufweist, die bevorzugt als Rippen ausgebildet sind. Die Dichtung, die bevorzugt als Dichthülse ausgestaltet ist, weist entsprechend auf der inneren Radialdichtungsoberfläche zumindest eine korrespondierende Ausprägung auf, die hinter eine fußseitige Rippe, die einen einseitig fußseitig offenen Raum bildet, greift und/oder zwischen die Rippen in dort gebildete Räume eingreift.

In den beiden genannten Beispielen kann das Gehäusematerial des Anschlussteils aus Kunststoff oder Metall sein. Weiterhin kann in den beiden genannten Ausgestaltungen das Dichtmaterial der Dichtung aus Kunststoff, Gummi oder Silikon sein. Insbesondere kann in beiden Ausgestaltungen die Dichtung separat gefertigt oder an das Anschlussteil gespritzt werden.

In einer dritten beispielhaften Ausgestaltung ist vorgesehen, dass das Anschlussteil mit der Dichtung einstückig ausgestaltet ist. Insbesondere sind Anschlussteil und Dichtung in einem Arbeitsgang gefertigt, beispielsweise gespritzt, gesintert oder generativ gefertigt. In dieser Ausgestaltung kann das Anschlussteil aus Kunststoff oder einem insbesondere sehr harten Dichtmaterial gefertigt sein. Die Dichtung kann aus Silikon oder einem Kunststoff gefertigt sein, insbesondere dem gleichen Dichtmaterial wie das Anschlussteil. In einer vierten Ausgestaltung kann das Anschlussteil mit der Dichtung und der Kopfdichtung des Druckelementes einstückig ausgestaltet sein.

In allen vier Ausgestaltungen kann die Kopfdichtung einstückig oder materialuneinheitlich dem Anschlussteil zugeordnet sein.

Weiterhin wird ein Anschlussteil mit einer Dichtung zur Verwendung in einem oben beschriebenen Verschraubungssystem vorgeschlagen, wobei das Anschlussteil ein Anschlussmittel und einen Druckelementanschluss umfasst, wobei der Anschlussteil und die Dichtung materialuneinheitlich ausgebildet sind, wobei die Dichtung zumindest eine sich nach radial innen erstreckende Ausprägung aufweist, wobei zumindest eine Ausprägung die Axialdichtungsoberfläche umfasst wobei die Dichtung zwischen Anschlussmittel und Druckelementanschluss angeordnet ist. Bevorzugt ist das Anschlussmittel als Doppelnippel ausgestaltet. In einer weiteren Ausführungsform ist vorgesehen, dass der Dichtungsabschnitt zumindest ein Haltemittel aufweist, das weiter bevorzugt als insbesondere vollständig umlaufende Rippe ausgeführt ist. Weiterhin kann das Anschlussteil wie oben beschrieben ausgestaltet sein. Die Dichtung umfasst eine äußere Radialdichtungsoberfläche, die zumindest teilweise mit einer Kontaktfläche eines Kontaktwandungsabschnitts des Verschraubungssystem dichtend zusammen wirken kann.

Weiterhin wird ein Verfahren zur Montage eines Verschraubungssystems mit einer Anschlussgeometrie und zumindest einem Langformteil vorgeschlagen. Ein Druckelementanschluss eines Anschlussteils wird mit einem Druckelement verbunden. Vor oder nach zumindest einer Teilmontage des Verschraubungssystems wird ein Anschlussmittel des Anschlussteils in eine Ausnehmung der Anschlussgeometrie eingebracht, wobei vor oder nach zumindest der Teilmontage des Verschraubungssystems das zumindest eine Langformteil zumindest durch eine Anschlussteilausnehmung des Anschlussteils und eine Ausgangsausnehmung des Druckelements geführt wird. Das Druckelement wird derart auf das Anschlussteil aufgebracht, dass eine zum Anschlussteil materialuneinheitlich ausgebildete Dichtung des Anschlussteils zumindest teilflächig dichtend mit einer Kontaktfläche des Druckelementes wirkt, wobei die Dichtung eine Ausprägung aufweist, die sich radial nach innen erstreckt, wobei zumindest eine Ausprägung eine Axialdichtungsoberfläche umfasst. Das Anschlussteil wird derart in die Ausnehmung der Anschlussgeometrie eingebracht, dass eine Axialdichtungsoberfläche der Dichtung dichtend mit der Anschlussgeometrie zusammen wirkt.

Bevorzugt wird die Dichtung mit dem Anschlussteil verbunden. Im Sinne der Erfindung ist unter einem Verbinden der Dichtung mit dem Anschlussteil, insbesondere dem Dichtungsabschnitt, zu verstehen, dass das Anschlussteil in die Dichtung, die bevorzugt als Dichthülse ausgestaltet ist, eingeführt wird oder die Dichtung an das Anschlussteil angespritzt wird oder die Dichtung mit dem Anschlussteil in einem Fertigungsschritt gefertigt und insbesondere materialverbunden wird.

Weiterhin wird eine Verwendung eines oben genannten Verschraubungssystems vorgeschlagen zur dichtenden Verschraubung eines Langformteils mit einer Anschlussgeometrie.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zur weiteren Ausgestaltung kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen
- Fig. 1: eine Explosionsansicht einer ersten Ausführungsform des erfindungsgemäßen Verschraubungssystems;
- Fig. 2: eine Aufsicht auf das Verschraubungssystem aus Fig. 1;
- Fig. 3: eine Schnittansicht III-III aus Fig. 2;
- Fig. 4: eine vereinzelte Dichtung aus Fig. 3;
- Fig. 5: eine Detailansicht V aus Fig. 3;
- Fig. 6: eine Explosionsansicht einer alternativen Ausführungsform des Verschraubungssystems;
- Fig. 7: eine Aufsicht auf das Verschraubungssystem aus Fig. 6;
- Fig. 8: eine Schnittansicht VIII-VIII aus Fig. 7;
- Fig. 9: eine Detailansicht IX aus Fig. 8;
- Fig. 10: eine Skizze eines alternativen Verschraubungssystems;
- Fig. 11: eine Schnittansicht des Verschraubungssystems aus Fig. 10 mit einem Langformteil mit kleinem Durchmesser; und
- Fig. 12: eine Schnittansicht des Verschraubungssystems aus Fig. 10 mit einem Langformteil mit großem Durchmesser.

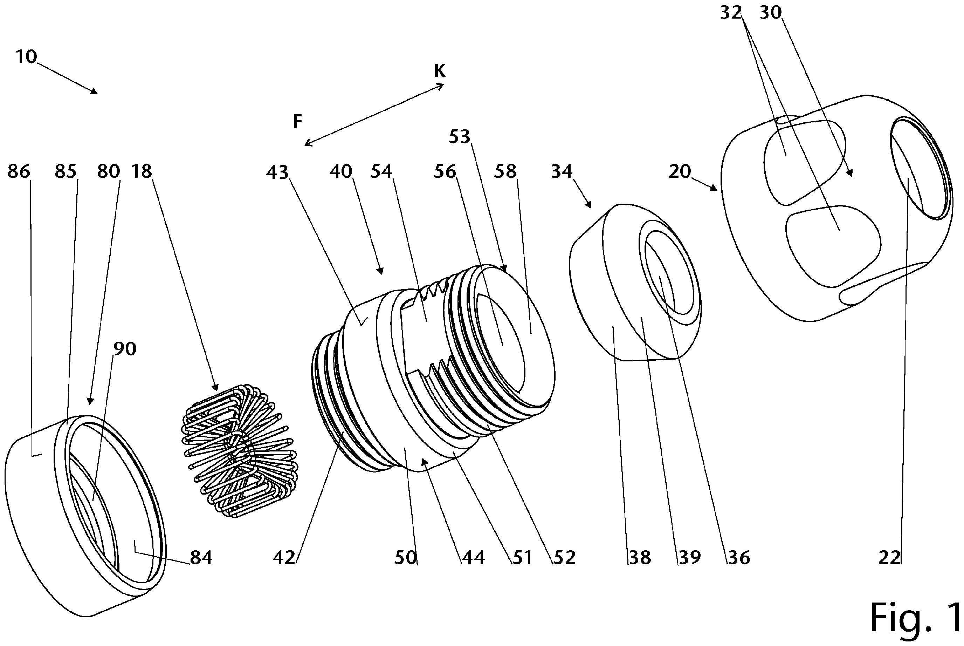

Fig. 1 zeigt eine Explosionsansicht eines Verschraubungssystems 10. Eine als Dichthülse ausgestaltete Dichtung 80 umfasst eine innere Radialdichtungsoberfläche 84 und eine äußere Radialdichtungsoberfläche 86. Weiterhin ist der Fig. 1 zu entnehmen, dass die Dichtung 80 eine Ausprägung 90 aufweist, die radial nach innen ragt. Die äußere Radialdichtungsoberfläche 86 weist eine Anfasung 85 auf.

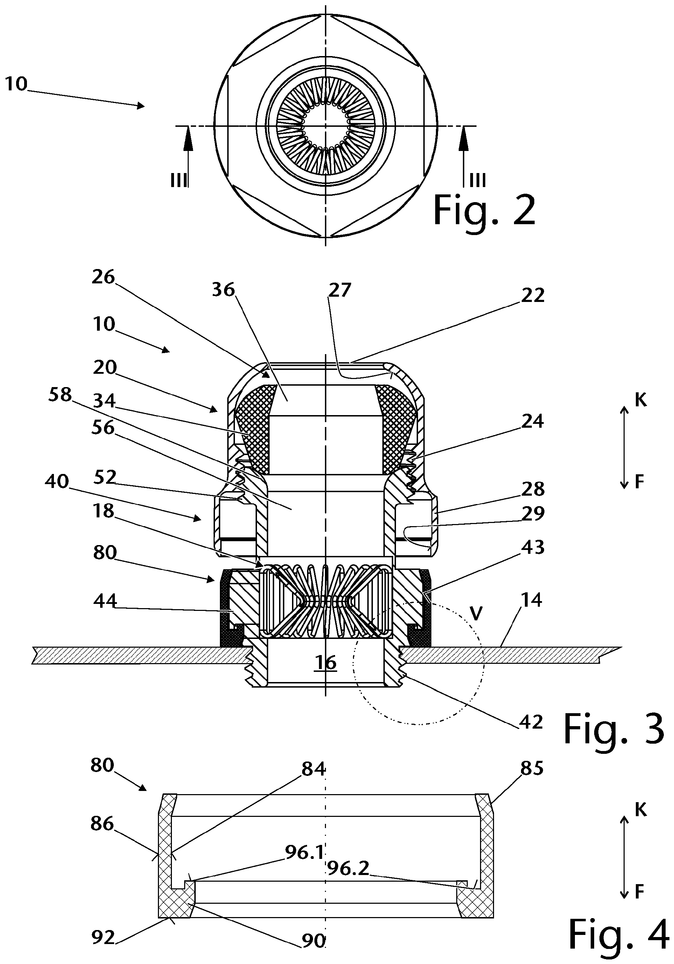

Ein Anschlussteil 40 ist als Doppelnippel ausgestaltet. Das Anschlussteil 40 umfasst ein Anschlussmittel 42 und einen Druckelementanschluss 45, wobei zwischen dem Anschlussmittel 42 und dem Druckelementanschluss 52 ein Dichtungsabschnitt 44 angeordnet ist. Sowohl das Anschlussmittel 42 als auch der Druckelementanschluss 52 sind als Außengewinde ausgeführt. Des Weiteren weist der Druckelementanschluss 52 Schlüsselanlagenflächen 54 auf, mittels der das Anschlussteil 40 über das Anschlussmittel 42 in eine hier nicht gezeigte Anschlussgeometrie 14, die beispielsweise Fig. 2 zu entnehmen ist, eingeschraubt werden kann. Das Anschlussteil 40 weist des Weiteren eine Anschlussteilausnehmung 56 auf, die vollständig durchgehend durch das Anschlussteil 40 ist. An einem kopfseitigen Ende 53 des Anschlussteils 40 weist das Anschlussteil 40 ein Kopfdichtungslager 58 auf, in die eine Kopfdichtung 34 mit einem konischen Abschnitt 38 aufsetzbar ist. Bevorzugt weist das Kopfdichtungslager 58 eine trichterförmige oder gewölbte, insbesondere einen Radius aufweisende, Ausgestaltung auf. Der Dichtungsabschnitt 44 umfasst eine glatte Dichtungsabschnittsoberfläche 43, die mit der ebenfalls in dieser Ausgestaltung glatt ausgeführten inneren Radialdichtungsoberfläche 84 der Dichtung 80 korrespondiert. Weiterhin umfasst der Dichtungsabschnitt 44 eine Fase 51. Fakultativ kann eine EMV-Feder 18 zur Verbesserung der elektromagnetischen Verträglichkeit in das Anschlussteil eingebracht sein.

Die Kopfdichtung 34 weist eine durchgängige Kopfdichtungsausnehmung 36 auf. Des Weiteren weist die Kopfdichtung 34 neben dem konischen Abschnitt 38, der dem Kopfdichtungslager 58 zuordenbar ist, einen Druckabschnitt 39 auf, der linsenförmig ausgestaltet ist.

Ein als Überwurfmutter ausgestaltetes Druckelement 20 weist eine Ausgangsausnehmung 22 auf. Das Druckelement 20 weist einen Außenumfang 30 auf, auf dem Schlüsselanlagenflächen 32 ausgebildet sind.

Fig. 2 zeigt eine Aufsicht auf das montierte Verschraubungssystem 10 aus Fig. 1.

Fig. 3 zeigt eine Schnittansicht III-III aus Fig. 2. Zu erkennen ist, dass das Anschlussteil 40 mit dem Anschlussmittel 42 in eine Durchgangsausnehmung 16 der Anschlussgeometrie 14 eingeschraubt ist. Die Dichtung 80 ist auf einer Dichtungsabschnittsoberfläche 43 des Dichtungsabschnitts 44 angeordnet. Im fußseitigen Bereich F der Anschlussteilausnehmung 56 ist die EMV-Feder 18 angeordnet. Der Fig. 3 ist des Weiteren zu entnehmen, dass auf den Druckelementanschluss 52 mittels eines Befestigungsmittels 24 das Druckelement 20 aufgeschraubt ist. Das Befestigungsmittel 24 ist insbesondere als Innengewinde ausgeführt. Das Druckelement 20 weist neben der Ausgangsausnehmung 22 eine Kopfdichtungsaufnahme 26 auf, die kopfseitig K des Befestigungsmittels 24 angeordnet ist. Die Kopfdichtungsaufnahme 26 ist ein Raumabschnitt innerhalb des Druckelements 20, dem sich die Kopfdichtung 34 zumindest teilweise, und besonders bevorzugt der linsenförmige Druckabschnitt 39 mit der sich zu einer Kopfseite der Kopfdichtung 34 verjüngenden Kopfdichtungsausnehmung 36, befindet. Fig. 3 zeigt lediglich eine Teilmontage des Druckelements 20 auf dem Anschlussteil 40. Wird das Druckelement 20 weiter auf das Anschlussteil 40 in Richtung fußseitig F geschraubt, drückt eine Innenoberfläche 27 auf die Kopfdichtung 34 und presst diese auf das Kopfdichtungslager 58 des Anschlussteils 40. Hierdurch verändert sich zumindest teilweise eine lichte Weite, die übersichtshalber hier nicht weiter bezeichnet ist, der Kopfdichtungsausnehmung 36.

Weiterhin wird durch das Aufschrauben des Druckelements 20 auf das Anschlussteil 40 eine Kontaktfläche 29 eines Kontaktwandungsabschnitts 28 des Druckelementes 20 mit der äußeren Radialdichtungsoberfläche 86 der Dichtung 80 in Kontakt gebracht. Hierdurch ergibt sich eine definierte radiale Abdichtung zwischen dem Anschlussteil und dem Druckelement 20. Die Kontaktfläche 29 ist auf einem nicht weiter bezeichneten radial nach innen vorspringenden, vollständig umlaufenden Absatz auf der Innenseite des Kontaktwandungsabschnitts 28 angeordnet. Durch diese Ausgestaltung weist die Kontaktfläche 29 eine definierte Flächengröße auf, die durch eine Höhe des Absatzes vorgegeben ist. Vorteilhaft daran ist insbesondere, dass eine definierte Abdichtung der Kontaktfläche 29 erzeugt wird und weiter bevorzugt ein Reibwiderstand, der zwischen Dichtung und Kontaktfläche erzeugt wird, beim Aufschrauben des Druckelement 20 auf dem Anschlussteil 40 gleich bleibt - unabhängig davon, wie weit das Druckelement 20 auf das Anschlussteil 40 geschraubt ist.

Fig. 4 zeigt in Alleinstellung die vereinzelte Dichtung 80 aus Fig. 3. Fig. 4 ist zu entnehmen, dass die Dichtung 80 eine äußere Radialdichtungsoberfläche 86 und eine innere Radialdichtungsoberfläche 84 aufweist, die in dieser Ausgestaltung konzentrisch gegenüberliegend sind. Des Weiteren weist die Dichtung 80 eine Anfasung 85 auf, die insbesondere eine vorteilhafte Kontaktaufnahme mit der Kontaktfläche 29 des Kontaktwandungsabschnitts 28 des Druckelements 20 begünstigt. Bevorzugt wird ein Abschälen der Dichtung 80 von dem Anschlussteil 40 beim Aufschrauben des Druckelements 20 über die Dichtung 80 durch die Anfasung 85 verhindert. Weiterhin ist eine Ausprägung 90 mit kopfseitig K ausgebildeter Axialsitzoberflächen 96.1 und 96.2 und fußseitig F ausgebildeter Axialdichtungsoberfläche 92 zu erkennen.

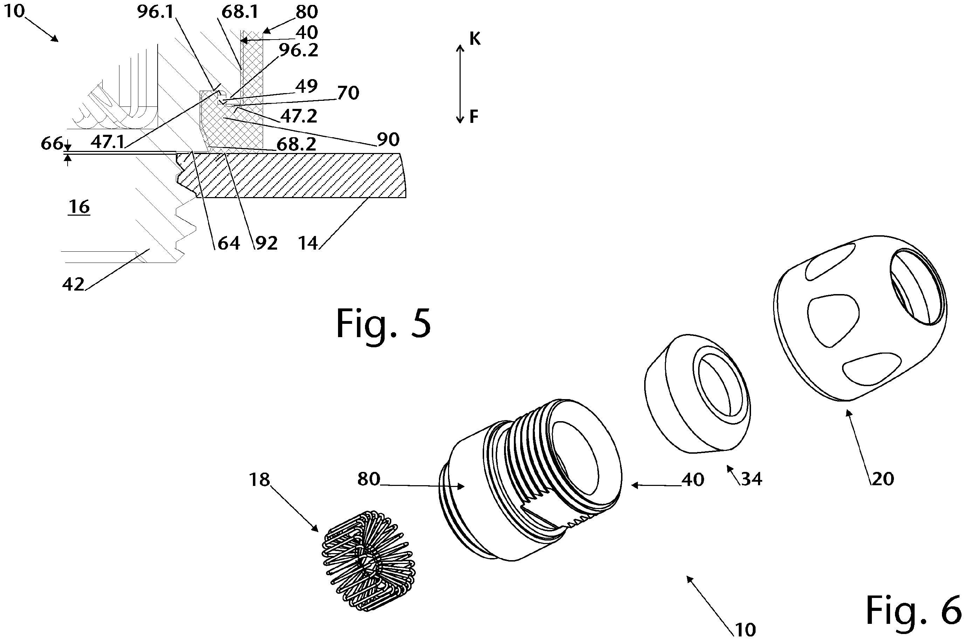

Fig. 5 zeigt eine Detailansicht V aus Fig. 3, mit der das Zusammenwirken der Oberflächen einzelner Teile des Verschraubungssystems 10 verdeutlicht wird. Fig. 5 zeigt, dass das Anschlussteil 40 mit dem Anschlussteil 42 soweit in die Durchgangsausnehmung 16 der Anschlussgeometrie 14 eingeschraubt ist, dass die Axialdichtungsoberfläche 92 der Dichtung 80 auf der Anschlussgeometrie 14 aufliegt. Die Dichtung 80 steht über eine Anschlussgeometriekontaktfläche 64 des Anschlussteils 40 um eine Länge 66 hinaus. Wird das Anschlussteil 40 weiter in die Anschlussgeometrie 14 hineingeschraubt, so dass die Anschlussgeometriekontaktfläche 64 auf dieser aufliegt, wird die Dichtung 80 zwischen der Anschlussgeometrie 14 und der Anschlussgeometriekontaktfläche 64 des Anschlussteils 40 definiert verpresst. Fig. 5 zeigt den unverpressten Zustand der Dichtung 80.

Weiterhin ist der Fig. 5 zu entnehmen, dass die Axialsitzoberflächen 96.1 und 96.2 der Dichtung 80 mit der Haltemittelaxialoberflächen 47.1 und 47.2 des Anschlussteils 40 interagieren. Das Anschlussteil 40 weist des Weiteren eine Hinterschneidung 49 auf, in welche die Ausprägung 90 der Dichtung 80 zumindest teilweise formschlüssig eingreift. Die Dichtung 80 ist interferierend mit dem Anschlussteil 40 gezeichnet, was als Presspassungen 68.1 und 68.2 zwischen der Dichtung 80 und dem Anschlussteil 40 zu verstehen ist. Insbesondere weist die Dichtung 80 in einem nichtmontierten Zustand eine hier nicht bezeichnete geringere lichte Innenweite auf, die kleiner ist als der Außenumfang des Anschlussteils 40, der ebenfalls hier nicht weiter bezeichnet ist, an korrespondierender Stelle. Des Weiteren ist die Dichtung 80 derart ausgestaltet, dass diese mit einem axialen Presssitz 70 auf dem Anschlussteil 40 sitzt, was ebenfalls als interferierende Schraffur skizziert ist.

Fig. 6 zeigt eine alternative Ausgestaltung des Verschraubungssystems 10 mit einem Anschlussteil 40, einer auf dem Anschlussteil angespritzte Dichtung 80, einer EMV-Feder 18, einer Kopfdichtung 34 und einem Druckelement 20.

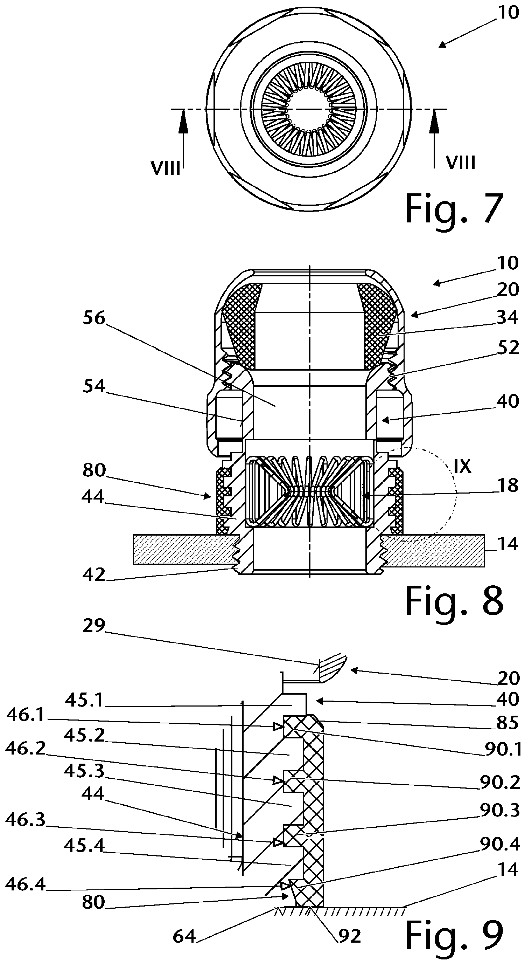

Fig. 7 zeigt eine Aufsicht des montierten Verschraubungssystems 10 aus Fig. 6.

Fig. 8 zeigt eine Schnittansicht VIII-VIII des Verschraubungssystems 10 aus Fig. 7. Das Druckelement 20 ist auf dem Anschlussteil 40 aufgeschraubt, so dass die Kopfdichtung 34 von Druckelement 20 und Anschlussteil 40 einklemmbar ist. Wie auch schon in der vorherigen Ausgestaltung in Fig. 3 zu sehen ist, wird das Gewinde des Druckelementanschlusses 52 von Schlüsselanlagenflächen 54 zumindest teilweise unterbrochen. Die EMV-Feder 18 ist in der Anschlussteilausnehmung 56 des Anschlussteils 40 angeordnet. Die als Dichthülse ausgebildete Dichtung 80 ist auf dem Dichtungsabschnitt 44 des Anschlussteils 40 angeordnet.

Fig. 9 zeigt im Detail IX aus Fig. 8 die Aufbringung der Dichtung 80 auf dem Dichtungsabschnitt 44 des Anschlussteils 40. Haltemittel 45.1 bis 45.4 des Dichtungsabschnitts 44 sind als Rippen ausgestaltet, die bevorzugt umlaufend um den Dichtungsabschnitt 44 auf diesem angeordnet. In die zwischen den Haltemitteln 45.1 bis 45.4 gebildeten Räume 46.1 bis 46.4 greifen Ausprägungen 90.1 bis 90.4 der Dichtung 80 ein, um ein Verschieben der Dichtung 80 auf dem Anschlussteil 40 im Wesentlichen zu vermeiden. Die Ausprägung 90.4 greift dabei in einen fußseitig offenen Raum 46.4 ein, der durch das Haltemittel 45.4 kopfseitig begrenzt ist und damit einen Rücksprung bildet. Des Weiteren weist die Dichtung 80 eine Anfasung 85 auf, die es dem Druckelement 20 erleichtert, sich über die Dichtung 80 zu schieben, insbesondere um einen Druckkontakt mit der Kontaktfläche 29 auf die Dichtung 80 auszubilden. Des Weiteren geht aus Fig. 9 hervor, dass die nicht weiter bezeichnete lichte Weite des Druckelements 20 bei der Kontaktfläche 29 kleiner ist als der ebenfalls nicht bezeichnete Durchmesser der Dichtung 80. Hierdurch wird eine definierte Pressung der Kontaktfläche 29 auf der Dichtung 80 erreicht, die eine optimale Abdichtung zur Folge hat.

Der Fig. 9 ist zu entnehmen, dass das Anschlussteil 40 vollständig in die Anschlussgeometrie 14 eingeschraubt ist, so dass die Anschlussgeometriekontaktfläche 64 mit der Anschlussgeometrie 14 in Kontakt steht. Die Anschlussgeometriekontaktfläche 64 bildet zusammen mit der Axialdichtungsoberfläche 92 der Dichtung 80 eine gemeinsame Dichtungsfläche zur Anschlussgeometrie 14.

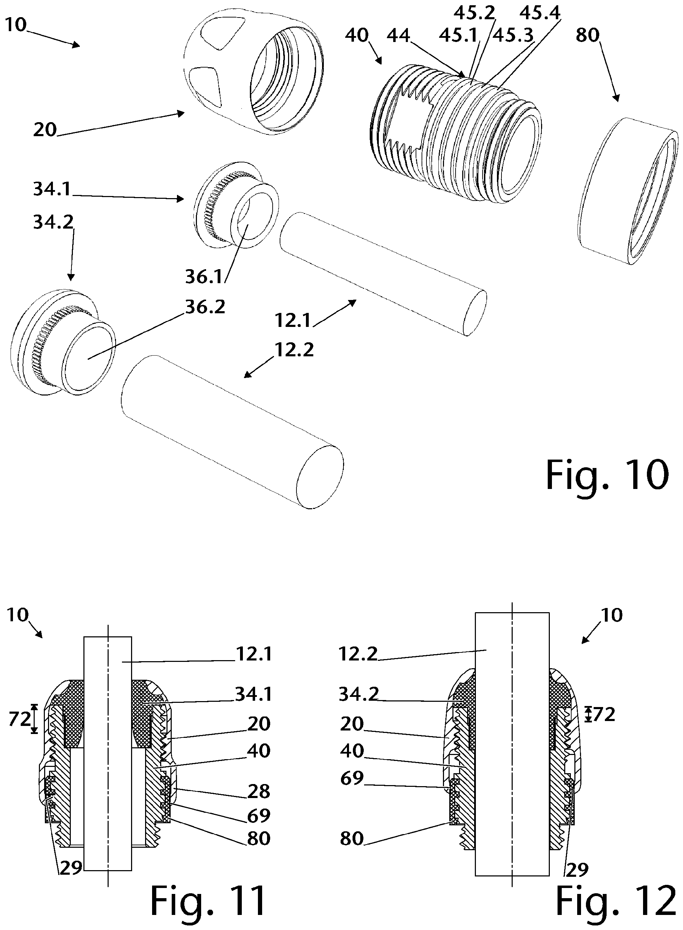

Fig. 10 zeigt ein Verschraubungssystem 10 mit einem Druckelement 20, einem Anschlussteil 40 und einer Dichtung 80. Die Kopfdichtung 34 ist in zwei Verpressungszuständen 34.1 und 34.2 gezeigt, denen jeweils ein als beispielsweise Schlauch ausgebildetes Langformteil 12.1 und 12.2 zugeordnet ist. Wie in den Fig. 11 und 12 gezeigt, ist eine lichte Weite der Kopfdichtung 34 an einen Durchmesser der Langformteile 12.1 und 12.2 anpassbar. Die Dichtung 80 ist bevorzugt an das Anschlussteil 40 angespritzt und ist der Übersichtlichkeit halber getrennt von diesem dargestellt. Das Anschlussteil 40 weist Haltemittel 45.1 bis 45.4 auf. Die Kopfdichtung 34 ist domförmig beziehungsweise hutförmig, im Querschnitt gesehen (s. Fig. 11 und 12), ausgebildet und kann zwischen dem Druckelement 20 und dem Anschlussteil 40 eingesetzt werden, um das Verschraubungssystem 10, je nach in den Fig. 11 und 12 gezeigte Einschraubtiefe 70 des Druckelements 20 auf dem Anschlussteil 40, auf unterschiedliche, hier nicht näher bezeichnete Durchmesser der Langformteile 12.1 oder 12.2 anzupassen.

Fig. 11 zeigt einen Längsschnitt des Verschraubungssystems 10 aus Fig. 10 mit der verpressten Kopfdichtung 34.1, die zwischen dem Druckelement 20 und dem Anschlussteil 40 eingeklemmt ist. Das Langformteil 12.1 ist in das Verschraubungssystem 10 eingeführt. Das Druckelement 20 ist um die Einschraubtiefe 72 so weit auf das Anschlussteil 40 geschraubt, dass die verpresste Kopfdichtung 34.1 sich an das Langformteil 12.1 mit einem nicht weiter bezeichneten kleinen Durchmesser schmiegt, dieses hält und abdichtet. Auch ist der Fig. 11 zu entnehmen, dass das Druckelement 20 so weit auf das Anschlusselement 40 geschraubt ist, dass der Kontaktwandungsabschnitt 28 mit der Dichtung 80 dichtend zusammen wirkt. Die Kontaktfläche 29 des Kontaktwandungsabschnittes 28 sitzt mit einer Presspassung 69 auf der Dichtung 80.

Fig. 12 zeigt einen Längsschnitt des Verschraubungssystems 10 aus Fig. 10 mit der wenig verpressten Kopfdichtung 34.2, die zwischen dem Druckelement 20 und dem Anschlussteil 40 eingeklemmt ist. Das Langformteil 12.2, das einen größeren, hier nicht näher bezeichneten Durchmesser aufweist als das Langformteil 12.1, ist in das Verschraubungssystem 10 eingeführt und wird durch die Kopfdichtung 34.2 abgedichtet und gehalten. Das Druckelement 20 ist dazu mit einer geringeren Einschraubtiefe 72 im Vergleich zu der Fig. 11 mit dem Langformteil 12.1 mit dem kleinere Durchmesser auf das Anschlussteil 40 geschraubt. Die Einschraubtiefe 72 ist zumindest derart, dass die Kontaktfläche 29 des Kontaktwandungsabschnittes 28 mit der Presspassung 69 auf der Dichtung 80 sitzt. Bei einer größeren Einschraubtiefe 72, wie in Fig. 11 gezeigt, ragt weniger der Dichtung 80 aus dem Druckelement 20 heraus als bei einer kleineren Einschraubtiefe 72, wie in Fig. 12 gezeigt.

Die in den Fig. 1 bis 12 gezeigten Verbindungen von Anschlussteil 40 und Dichtung 80 und/oder Kopfdichtung 34 können materialuneinheitlich ausgestaltet sein. Beispielsweise ist die Dichtung 80 auf das Anschlussteil 40 aufgeschoben oder derart gestaltet, dass die Dichtung 80 an das Anschlussteil 40 angespritzt wird. Alternativ ist vorgesehen, dass das Anschlussteil 40 und die Dichtung 80 einstückig ausgestaltet sind, beispielsweise in einem Verfahrensarbeitsschritt beziehungsweise in einem Werkzeug hergestellt, insbesondere mittels eines Zweikomponenten-Spritzgussverfahrens. Bei dieser Ausgestaltung ist eine klare Trennung zwischen Anschlussteil 40 und Dichtung 80, wie in den Fig. 1 bis 12 gezeigt, nicht mehr zu sehen. Weiterhin kann die Kopfdichtung 34, insbesondere auch unabhängig von der Dichtung 80, einstückig oder materialuneinheitlich mit dem Anschlussteil 40 ausgestaltet sein.

Die in den Figuren dargestellten Ausführungsformen können mit einer unterschiedlichen Anzahl von Rippen des Dichtungsabschnitts und der als Dichthülse ausgebildeten Dichtung beziehungsweise einer unterschiedlichen Anzahl von Hinterschneidungen sowie mit Rippen und Hinterschneidungen in Kombination ausgestaltet sein, wie dies vorstehend erläutert ist. Ansonsten können die in den Figuren gezeigten Ausgestaltungen entsprechend der in der obigen Beschreibung genannten Ausführungsformen abgewandelt sein.

Durch das vorgeschlagene Verschraubungssystem 10 für mindestens ein Langformteil wird eine sichere und insbesondere für den Lebensmittelbereich hygienekonforme Abdichtung erreicht, die nur wenige Bauteile benötigt und somit auch wenig Nester für Mikroorganismen bieten kann. Das Verschraubungssystem 10 lässt sich zudem sehr einfach verschrauben, so dass Handhabungsfehler weitestgehend ausgeschlossen sind. Eine Anpassung beispielsweise an einen Durchmesser des Langformteils lässt sich einfach durch das Verschraubungssystem 10 anpassen, ohne dass weitere Bauteile wie beispielsweise Einsätze oder Unterlegscheiben verwendet werden müssten.

## Patentansprüche

1. Anschlussteil (40) mit einer Dichtung (80), wobei das Anschlussteil (40) ein Anschlussmittel (42) und einen Druckelementanschluss (52) umfasst, wobei das Anschlussteil (40) und die Dichtung (80) materialuneinheitlich ausgebildet sind, wobei die Dichtung (80) zumindest eine sich nach radial innen erstreckende Ausprägung (90) aufweist, wobei die Dichtung (80) eine äußere Radialdichtungsoberfläche (86) und die zumindest eine Ausprägung (90) zumindest eine Axialdichtungsoberfläche (92) umfasst, wobei die Dichtung (80) zwischen Anschlussmittel (42) und Druckelementanschluss (52) angeordnet ist.

2. Anschlussteil (40) nach Anspruch 1 mit einem Druckelement (20), **dadurch gekennzeichnet, dass** das Anschlussteil (40) und das Druckelement (20) ein Verschraubungssystem (10) bilden, wobei das Druckelement (20) zumindest einen Kontaktwandungsabschnitt (28) mit einer Kontaktfläche (29) umfasst, wobei die äußere Radialdichtungsoberfläche (86) zumindest teilweise mit der Kontaktfläche (29) dichtend zusammen wirkt und wobei die Axialdichtungsoberfläche zur Abdichtung mit einer Anschlussgeometrie (14) ausgestaltet ist.

3. Anschlussteil (40) nach Anspruch 2, **dadurch gekennzeichnet, dass** die Dichtung (80) als Dichthülse ausgebildet ist.

4. Anschlussteil (40) nach einem oder mehreren der Ansprüche 2 bis 3, **dadurch gekennzeichnet, dass** ein Befestigungsmittel (24) des Druckelements (20) derart mit einem Druckelementanschluss (52) des Anschlussteils (40) verbindbar ist, dass der Kontaktwandungsabschnitt (28) den Dichtungsabschnitt (44) zumindest teilweise übergreift.

5. Anschlussteil (40) nach einem oder mehreren der Ansprüche 3 bis 4, **dadurch gekennzeichnet, dass** die Ausprägung (90) in eine Hinterschneidung (49) des Anschlussteils (40) zumindest teilweise formschlüssig eingreift.

6. Anschlussteil (40) nach einem oder mehreren der Ansprüche 3 bis 5, **dadurch gekennzeichnet, dass** die als Dichthülse ausgebildete Dichtung (80) mindestens eine Ausprägung (90.1, 90.2, 90.3, 90.4) umfasst, die in mindestens einen zwischen Haltemitteln (45.1, 45.2, 45.3, 45.4) des Anschlussmittel (40) gebildeten Raum (46.1, 46.2, 46.3, 46.4) eingreift.

7. Anschlussteil (40) nach einem oder mehreren der Ansprüche 5 bis 6, **dadurch gekennzeichnet, dass** die zumindest eine Ausprägung (90) eine Axialsitzoberfläche (96) umfasst, die mit einer Haltemittelaxialoberfläche (47) des Haltemittels (45) zusammen wirkt.

8. Anschlussteil (40) nach einem oder mehreren der Ansprüche 3 bis 7, **dadurch gekennzeichnet, dass** die als Dichthülse ausgebildete Dichtung (80) in Längsrichtung (48) des Anschlussteils (40) eine definierte Länge (66) über eine Anschlussgeometriekontaktfläche (64) des Anschlussteils (40) hinaus ragt.

9. Anschlussteil (40) nach einem oder mehreren der Ansprüche 2 bis 8, **dadurch gekennzeichnet, dass** die Dichtung (80) definiert axial mit der Anschlussgeometrie (14) und definiert radial mit dem Druckelement (20) abdichtend verpressbar ist.

10. Verfahren zur Montage eines Anschlussteils (40) nach einem oder mehreren der Ansprüche 2 bis 9 zur Bildung eines Verschraubungssystems (10) mit einer Anschlussgeometrie (14) und zumindest einem Langformteil (12), **dadurch gekennzeichnet, dass** ein Druckelementanschluss (52) eines Anschlussteils (40) mit einem Druckelement (20) verbunden wird, wobei vor oder nach zumindest einer Teilmontage des Verschraubungssystems (10) ein Anschlussmittel (42) des Anschlussteils (40) in eine Ausnehmung (16) der Anschlussgeometrie (14) eingebracht wird, wobei vor oder nach zumindest der Teilmontage des Verschraubungssystems (10) das mindestens eine Langformteil (12) zumindest durch eine Aufnahmeausnehmung (56) des Anschlussteils (40) und eine Ausgangsausnehmung (22) des Druckelements (20) geführt wird, wobei das Druckelement (20) derart auf das Anschlussteil (40) aufgebracht wird, dass eine zum Anschlussteil (40) materialuneinheitlich ausgebildete Dichtung (80) des Anschlussteils (40) zumindest teilflächig dichtend mit einer Kontaktfläche (29) des Druckelementes (20) wirkt, wobei eine äußere Radialdichtungsoberfläche (86) der Dichtung (80) zumindest teilweise mit der Kontaktfläche (29) des Kontaktwandungsabschnitts (28) dichtend zusammen wirkt, wobei die Dichtung (80) eine Ausprägung (90) aufweist, die sich radial nach innen erstreckt, wobei zumindest eine Ausprägung (90) eine Axialdichtungsoberfläche (92) umfasst und das Anschlussteil (40) derart in die Ausnehmung (16) der Anschlussgeometrie (14) eingebracht wird, dass die Axialdichtungsoberfläche (92) der Dichtung (80) dichtend mit der Anschlussgeometrie (14) zusammen wirkt.

11. Verwendung eines Anschlussteils (40) nach einem der Ansprüche 2 bis 9 zur dichtenden Verschraubung eines Langformteils (12) mit einer Anschlussgeometrie (14).

## Claims

1. Connecting part (40) including a seal (80), wherein the connecting part (40) comprises a connecting means (42) and pressure-element connector (52), wherein the connecting part (40) and the seal (80) are configured materially non-uniform, wherein the seal (80) has at least one radially-inwardly extending projection (90), wherein the seal (80) has an outer radial-seal surface (86), and wherein the at least one projection (90) comprises at least one axial-seal surface (92), wherein the seal (80) is disposed between connecting means (42) and pressure-element connector (52).

2. Connecting part (40) according to claim 1 inluding a pressure element (20), **characterized in that** the connecting part (40) and the pressure element (20) form a screw-connection system (10), wherein the pressure element (20) comprises at least one contact-wall section (28) including a contact surface (29), wherein the outer radial-seal surface (86) interacts in a sealing manner at least partially with the contact surface (29) and wherein the axial-seal surface is configured for sealing with a connecting geometry (14).

3. Connecting part (40) according to claim 2, **characterized in that** the seal (80) is configured as a seal sleeve.

4. Connecting part (40) according to one or more of claims 2 to 3, **characterized in that** an attachment means (24) of the pressure element (20) is connectable to a pressure-element connector (52) of the connecting part (40) such that the contact-wall section (28) at least partially overlaps the seal section (44).

5. Connecting part (40) according to one or more of claims 3 to 4, **characterized in that** the projection (90) engages at least partially in an interference-fit manner into an undercut (49) of the connecting part (40).

6. Connecting part (40) according to one or more of claims 3 to 5, **characterized in that** the seal (80) configured as a seal sleeve comprises at least one projection (90.1, 90.2, 90.3, 90.4) that engages into at least one space (46.1, 46.2, 46.3, 46.4) formed between retaining means (45.1, 45.2, 45.3, 45.4) of the connecting means (40).

7. Connecting part (40) according to one or more of claims 5 to 6, **characterized in that** the at least one projection (90) comprises an axial seat surface (96) that interacts with a retaining-means axial surface (47) of the retaining means (45).

8. Connecting part (40) according to one or more of claims 3 to 7, **characterized in that** the seal (80) configured as a seal sleeve projects in the longitudinal direction (48) of the connecting part (40) over a defined length (66) over a connecting-geometry contact surface (64) of the connecting part (40).

9. Connecting part (40) according to one or more of claims 2 to 8, **characterized in that** the seal (80) can be pressed in a sealing manner in a defined manner axially with the connecting geometry (14) and in a defined manner radially with the pressure element (20).

10. Method for installing a connecting part (40) according to one or more of claims 2 to 9 for forming a screw-connection system (10) including a connecting geometry (14) and at least one long-shaped part (12), **characterized in that** a pressure-element connector (52) of a connecting part (40) is connected to a pressure element (20), wherein before or after at least a partial installing of the screw-connection system (10), a connecting means (42) of the connecting part (40) is introduced into a recess (16) of the connecting geometry (14), wherein before or after at least the partial installing of the screw-connection system (10), the at least one long-shaped part (12) is guided at least through a receiving opening (56) of the connecting part (40) and an outlet opening (22) of the pressure element (20), wherein the pressure element (20) is applied onto the connecting part (40) such that a seal (80) of the connecting part (40), formed in a materially non-uniform manner to the connecting part (40), acts, at least partial-surface, in a sealing manner with a contact surface (29) of the pressure element (20), wherein an outer radial-seal surface (86) of the seal (80) interacts in a sealing manner at least partially with the contact surface (29) of the contact-wall section (28), wherein the seal (80) has a radially-inwardly extending projection (90), wherein at least one projection (90) comprises an axial-seal surface (92), and the connecting part (40) is introduced into the opening (16) of the connecting geometry (14) such that the axial-seal surface (92) of the seal (80) interacts in a sealing manner with the connecting geometry (14).

11. Use of a connecting part (40) according to one of claims 2 to 9 for sealing screw-connecting of a long-shaped part (12) including a connecting geometry (14).

## Revendications

1. Pièce de raccordement (40) avec un joint d'étanchéité (80), la pièce de raccordement (40) comprenant un moyen de raccordement (42) et un raccord d'élément de pression (52), la pièce de raccordement (40) et le joint d'étanchéité (80) étant formés dans un matériau non uniforme, le joint d'étanchéité (80) présentant au moins une saillie (90) s'étendant radialement vers l'intérieur, le joint d'étanchéité (80) comprenant une surface d'étanchéité radiale extérieure (86) et la au moins une saillie (90) comprenant au moins une surface d'étanchéité axiale (92), le joint d'étanchéité (80) étant disposé entre le moyen de raccordement (42) et le raccord d'élément de pression (52).

2. Pièce de raccordement (40) selon la revendication 1 avec un élément de pression (20), **caractérisée en ce que** la pièce de raccordement (40) et l'élément de pression (20) forment un système de vissage (10), l'élément de pression (20) comprenant au moins une section de paroi de contact (28) avec une surface de contact (29), la surface d'étanchéité radiale extérieure (86) interagissant au moins partiellement de manière étanche avec la surface de contact (29) et la surface d'étanchéité axiale étant configurée pour l'étanchéité avec une géométrie de raccordement (14).

3. Pièce de raccordement (40) selon la revendication 2, **caractérisée en ce que** le joint d'étanchéité (80) est formé comme une douille d'étanchéité.

4. Pièce de raccordement (40) selon une ou plusieurs des revendications 2 à 3, **caractérisée en ce qu'**un moyen de fixation (24) de l'élément de pression (20) peut être relié à un raccord d'élément de pression (52) de la pièce de raccordement (40) de telle manière que la section de paroi de contact (28) s'étend au moins partiellement sur la section d'étanchéité (44).

5. Pièce de raccordement (40) selon une ou plusieurs des revendications 3 à 4, **caractérisée en ce que** la saillie (90) s'engage au moins partiellement par complémentarité de forme dans une contre-dépouille (49) de la pièce de raccordement (40).

6. Pièce de raccordement (40) selon une ou plusieurs des revendications 3 à 5, **caractérisée en ce que** le joint d'étanchéité (80) formé comme une douille d'étanchéité comprend au moins une saillie (90.1, 90.2, 90.3, 90.4) qui s'engage dans au moins un espace (46.1, 46.2, 46.3, 46.4) formé entre des moyens de retenue (45.1, 45.2, 45.3, 45.4) de la pièce de raccordement (40).

7. Pièce de raccordement (40) selon une ou plusieurs des revendications 5 à 6, **caractérisée en ce que** la au moins une saillie (90) comprend une surface de logement axial (96) qui interagit avec une surface axiale de moyen de retenue (47) du moyen de retenue (45).

8. Pièce de raccordement (40) selon une ou plusieurs des revendications 3 à 7, **caractérisée en ce que** le joint d'étanchéité (80) formé comme une douille d'étanchéité dépasse d'une longueur définie (66) dans la direction longitudinale (48) de la pièce de raccordement (40) au-delà d'une surface de contact de géométrie de raccordement (64) de la pièce de raccordement (40).

9. Pièce de raccordement (40) selon une ou plusieurs des revendications 2 à 8, **caractérisée en ce que** le joint d'étanchéité (80) peut être comprimé de manière étanche de manière définie axialement avec la géométrie de raccordement (14) et de manière définie radialement avec l'élément de pression (20).

10. Procédé de montage d'une pièce de raccordement (40) selon une ou plusieurs des revendications 2 à 9 pour former un système de vissage (10) avec une géométrie de raccordement (14) et au moins une pièce moulée allongée (12), **caractérisé en ce qu'**un raccord d'élément de pression (52) d'une pièce de raccordement (40) est relié à un élément de pression (20), un moyen de raccordement (42) de la pièce de raccordement (40) étant introduit dans un évidement (16) de la géométrie de raccordement (14) avant ou après au moins un montage partiel du système de vissage (10), la au moins une pièce moulée allongée (12) étant guidée au moins à travers un évidement de réception (56) de la pièce de raccordement (40) et un évidement de sortie (22) de l'élément de pression (20) avant ou après au moins le montage partiel du système de vissage (10), l'élément de pression (20) étant appliqué de telle manière sur la pièce de raccordement (40), qu'un joint d'étanchéité (80) de la pièce de raccordement (40), formé dans un matériau non uniforme à celui de la pièce de raccordement (40), agit de manière étanche au moins sur une partie de sa surface avec une surface de contact (29) de l'élément de pression (20), une surface d'étanchéité radiale extérieure (86) du joint d'étanchéité (80) interagissant de manière étanche au moins partiellement avec la surface de contact (29) de la section de paroi de contact (28), le joint d'étanchéité (80) présentant une saillie (90) qui s'étend radialement vers l'intérieur, la au moins une saillie (90) comprenant une surface d'étanchéité axiale (92) et la pièce de raccordement (40) étant introduite dans l'évidement (16) de la géométrie de raccordement (14) de telle manière que la surface d'étanchéité axiale (92) du joint d'étanchéité (80) interagit de manière étanche avec la géométrie de raccordement (14).

11. Utilisation d'une pièce de raccordement (40) selon l'une des revendications 2 à 9 pour le vissage étanche d'une pièce moulée allongée (12) avec une géométrie de raccordement (14).
